# EUROPÄISCHE PATENTSCHRIFT

(11) **EP 0 787 607 B1**
(45) Veröffentlichungstag und Bekanntmachung des Hinweises auf die Patenterteilung: **14.05.2003**
(21) Anmeldenummer: 96114272.6
(22) Anmeldetag: 06.09.1996
(51) Int. Cl.: B60H 1/00, B60H 1/32, F16L 55/033

(54) **Schalldämpfungsvorrichtung**
Sound damping device
Dispositif d'amortissement du son

(30) Priorität: 08.09.1995 DE 19533270
(43) Veröffentlichungstag der Anmeldung: 06.08.1997
(73) Patentinhaber: Eaton Fluid Power GmbH, 76532 Baden-Baden (DE)
(72) Erfinder: Fritz, Thomas, 76593 Gernsbach (DE)
(74) Vertreter: Gleiss, Alf-Olav, Dr.jur. Dipl.-Ing.

(56) Entgegenhaltungen:
- EP-A- 0 014 257
- EP-A- 0 659 600
- BE-A- 637 182
- BE-A- 717 780
- DE-A- 2 456 399
- US-A- 3 669 471

## Beschreibung

Die Erfindung betrifft eine Klimaanlage, insbesondere Fahrzeug-Klimaanlage, mit den Merkmalen des Oberbegriffs des Anspruchs 1.

Derartige Klimaanlagen sind bekannt und werden insbesondere in Klimasystemen von Kraftfahrzeugen eingesetzt. Bekannte Schalldämpfungsvorrichtungen bestehen aus einem zylindrischen Schalldämpfungskörper, der in eine Rohrleitung einsetzbar ist, wobei die beiden Rohrenden üblicherweise an den Schalldämpfungskörper angelötet werden.

Eine Dämpfung der insbesondere durch Pulsation des Kältemittels und Vibration des Kompressors hervorgerufenen Schallwellen wird im Schalldämpfungskörper dadurch erreicht, daß er gegenüber der Rohrleitung einen größeren Durchmesser aufweist.

Dennoch ist diese Art der Schalldämpfung weiter verbesserungswürdig, da aufgrund der zunehmend leiser werdenden Fahrzeuge der von der Klimaanlage hervorgerufene Lärmpegel deutlicher hörbar wird.

Aus der BE 637 182 A ist eine Schalldämpfungsvorrichtung mit einem zumindest zwei Öffnungen aufweisenden Schalldämpfungskörper bekannt, der von einem flüssigen oder gasförmigen Medium durchströmbar ist und an dessen zumindest einer Öffnung ein Anschlussrohr anbringbar ist, und mit einer Entkopplungsvorrichtung, die zwischen Schalldämpfungskörper und Anschlussrohr anordenbar ist und aus einem elastischen Material besteht.

Die Aufgabe der vorliegenden Erfindung besteht deshalb darin, eine Klimaanlage mit einer Schalldämpfungsvorrichtung vorzusehen, die verbesserte Schalldämpfungseigenschaften aufweist.

Diese Aufgabe wird durch die in Anspruch 1 angegebene Klimaanlage gelöst. Dadurch, daß zwischen Schalldämpfungskörper und Anschlußrohr ein Entkopplungselement, vorzugsweise ein aus kautschukhaltigem Material bestehender Ring, angeordnet ist, kann die Ausbreitung von Vibrationen und Körperschall begrenzt werden. Darüber hinaus sorgt die elastische Entkopplungsvorrichtung dafür, daß sich der Schalldämpfungskörper sowohl in Längs- als auch in radialer Richtung ausdehnen kann, was zu einer weiteren Erhöhung der Schalldämpfungsfähigkeit beiträgt. Im übrigen lassen sich dadurch toleranzbedingte Abweichungen der Anschlußrohr-Durchmesser beziehungsweise der Schalldämpfungskörper-Durchmesser besser ausgleichen.

Bevorzugt ist die Innenwandung des Schalldämpfungskörpers mit einer in Umfangsrichtung laufenden Ausnehmung versehen, in die eine vorzugsweise als Ring ausgebildete Entkopplungsvorrichtung einbringbar ist. Damit ist der Ring in Längsrichtung vor einem Verrutschen gesichert.

Vorteilhaft ist eine entsprechende Ausbildung der Außenwandung des in den Schalldämpfungskörper einsteckbaren Anschlußrohrs, um auch ein Verrutschen des Rings auf diesem Anschlußrohr zu verhindern.

(Hieran schließen sich die übrigen Seiten 3 bis 7 der ursprünglichen Beschreibung in unveränderter Form an.) Weitere vorteilhafte Ausgestaltungen ergeben sich aus den übrigen Unteransprüchen.

Die Erfindung wird nun anhand von Ausführungsbeispielen mit Bezug auf die Zeichnungen näher erläutert. Dabei zeigen:
- Figur 1: eine Schnittansicht eines ersten Ausführungsbeispiels;
- Figur 2: eine Schnittansicht eines zweiten Ausführungsbeispiels;
- Figur 3: eine Schnittansicht eines dritten Ausführungsbeispiels, und
- Figur 4: eine Schnittansicht eines vierten Ausführungsbeispiels.

Eine Schalldämpfungsvorrichtung 1 weist einen Schalldämpfungskörper 3 sowie Entkopplungselemente 5 und 7 auf.

Der zylindrische Schalldämpfungskörper 3 weist an seinen Längsenden Öffnungen 9 und 11 auf, in die jeweils ein Anschlußrohr 13 beziehungsweise 15 hineinragt.

Der Innenraum 17 des Schalldämpfungskörpers 3 ist dabei so ausgebildet, daß ein flüssiges oder gasförmiges Medium, insbesondere ein Kältemittel (beispielsweise R 12 und R 134 A) von einem Anschlußrohr 13 zum gegenüberliegenden Anschlußrohr 15 strömen kann.

Um eine Dämpfung zu erreichen, ist der Strömungsquerschnitt des Schalldämpfungskörpers 3 größer gewählt als der Strömungsquerschnitt der Anschlußrohre 13 beziehungsweise 15.

Die Verbindung der Anschlußrohre 13,15 mit dem Schalldämpfungskörper 3 erfolgt mit Hilfe der ringförmig ausgebildeten elastischen Entkopplungselemente 5 beziehungsweise 7. Diese elastischen Entkopplungselemente sind dafür so ausgebildet, daß ihr Innendurchmesser etwas geringer gewählt ist als der Außendurchmesser eines Anschlußrohrs, und daß der Außendurchmesser des Entkopplungselements etwas größer ist als der Durchmesser des Schalldämpfungskörpers 3. Aufgrund der Elastizität dieses Entkopplungselements und der vorgenannten Abmessungen entsteht bei dessen Einquetschen zwischen dem Schalldämpfungskörper 3 und dem Anschlußrohr 13 beziehungsweise 15 eine formschlüssige Verbindung. Andere Verbindungs-Verfahren, wie beispielsweise Kleben, sind jedoch auch möglich.

Darüber hinaus hat diese Entkopplungsvorrichtung zusätzlich die Aufgabe, den Innenraum 17 des Schalldämpfungskörpers 3 nach außen hin abzudichten, so daß das Kältemittel nicht austreten kann.

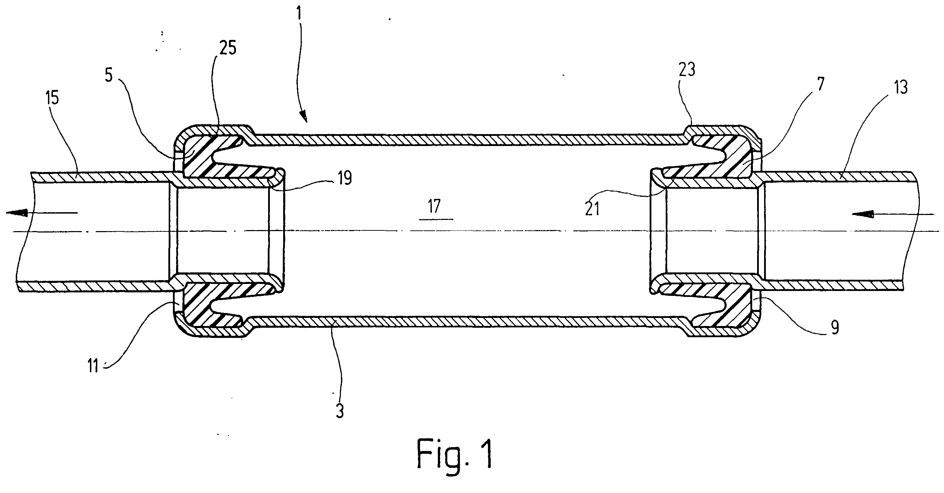

Aus Figur 1 ist ersichtlich, daß die Anschlußrohre 13 und 15 als auch der Schalldämpfungskörper 3 Ausformungen 19, 21, 23 beziehungsweise 25 aufweisen. Die beiden Ausformungen 19 und 21 in den Anschlußrohren 15 beziehungsweise 13 sind durch eine Verringerung des Außendurchmessers der Anschlußrohre gebildet. Zum Anschlußrohrende hin nimmt der Durchmesser jedoch wieder zu.

Die beiden Ausformungen 23 beziehungsweise 25 an den Längsenden des Schalldämpfungskörpers 3 sind in komplementärer Weise durch eine Vergrößerung des Innendurchmessers gebildet.

Figur 1 läßt darüber hinaus erkennen, daß die Entkopplungselemente 5 beziehungsweise 7 in den Ausformungen 19 und 25 beziehungsweise 21 und 23 liegen. Damit sind die beiden Entkopplungselemente 5 beziehungsweise 7 gegen ein Verschieben in Längsrichtung gesichert.

Durch die Verwendung dieser kautschukhaltigen elastischen Entkopplungselemente 5,7 wird die Übertragung von Körperschall beziehungsweise von Vibrationen vom Anschlußrohr 13 auf das Anschlußrohr 15 wirkungsvoll unterbunden.

In dem gezeigten Ausführungsbeispiel sind zur Erhöhung der Dämpfungseigenschaften die Entkopplungselemente 5,7 so ausgebildet, daß sie einen im wesentlichen U-förmigen Querschnitt aufweisen, wobei die beiden Schenkel in Längsrichtung verlaufen. Der innere Schenkel hat dabei im Querschnitt eine größere Breite als der äußere Schenkel.

Selbstverständlich kann statt der Ausformungen 19 bis 25 auch eine andere Art der formschlüssigen Verbindung und der Sicherung in Längsrichtung vorgesehen sein, beispielsweise durch Verklebung.

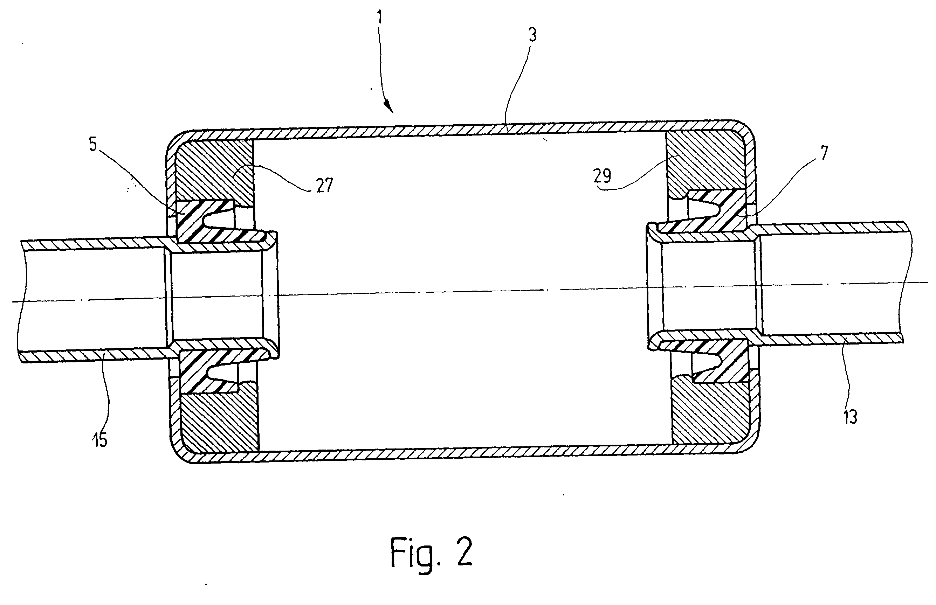

Die Figuren 2 bis 4 zeigen weitere Ausführungsbeispiele, wobei für gleiche Teile gleiche Bezugszeichen verwendet werden. Auf deren nochmalige Beschreibung wird deshalb verzichtet.

Das in Figur 2 gezeigte zweite Ausführungsbeispiel unterscheidet sich gegenüber dem ersten im wesentlichen dadurch, daß zwischen den Entkopplungselementen 5 und 7 und dem Schalldämpfungskörper Distanzringe 27 beziehungsweise 29 vorgesehen sind. Mit Hilfe dieser Distanzstücke hat man bezüglich der Wahl des Durchmessers des Schalldämpfungskörpers 3 mehr Freiheiten, ohne auch die Entkopplungselemente 5 und 7 auswechseln zu müssen.

Die Verbindung dieser Distanzstücke 27 beziehungsweise 29 mit den Entkopplungselementen 5 beziehungsweise 7 und dem Schalldämpfungskörper 3 erfolgt mittels einer Quetschverbindung, wobei andere formschlüssige Verbindungsmöglichkeiten beispielsweise Verkleben, auch denkbar sind.

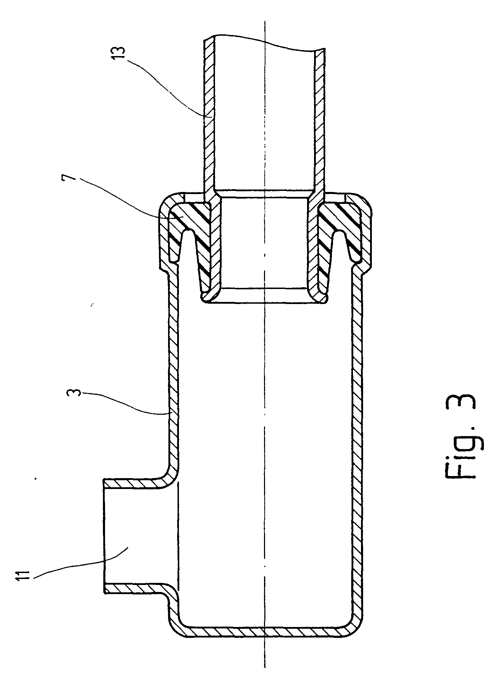

Das Ausführungsbeispiel gemäß Figur 3 entspricht im wesentlichen dem ersten, wobei jedoch die Öffnung 11 im Schalldämpfungskörper 3 am Zylindermantel vorgesehen ist.

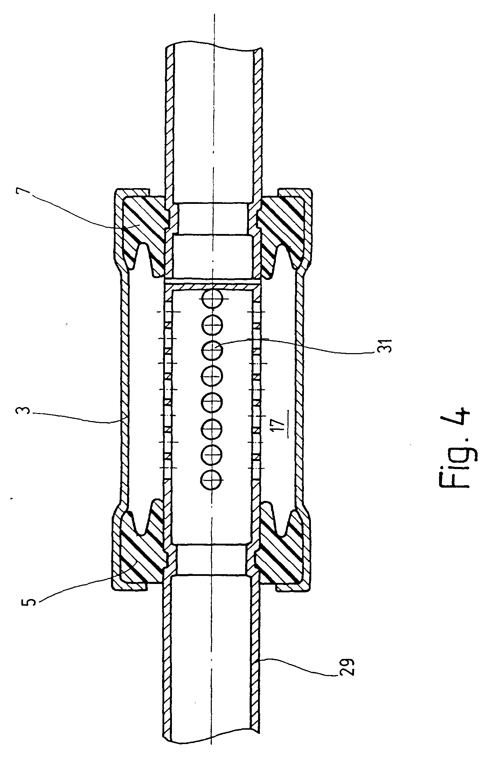

Das in Figur 4 gezeigte vierte Ausführungsbeispiel unterscheidet sich gegenüber dem ersten Ausführungsbeispiel dadurch, daß der Schalldämpfungskörper 3 ein durchgehendes Rohr 29 umschließt. Im Rohr 29 vorgesehene Bohrungen 31 sorgen für eine Verbindung zwischen dem Inneren des Rohrs 29 und dem Innenraum 17 des Schalldämpfungskörpers 3.

Um eine bessere Dämpfung von Körperschall und Vibrationen zu ermöglichen, sollte eine Trennung des Rohrs 29 im Inneren des Schalldämpfungskörpers 3 erfolgen, so daß zwei getrennte Anschlußrohre entstehen.

## Patentansprüche

1. Klimaanlage, insbesondere Fahrzeug-Klimaanlage, mit einer Schalldämpfungsvorrichtung mit einem zumindest zwei Öffnungen (9,11) aufweisenden Schalldämpfungskörper (3), der von einem flüssigen oder gasförmigen Medium durchströmbar ist und an dessen zumindest einer Öffnung (9) ein Anschlussrohr (13) anbringbar ist, und mit einer Entkopplungseinrichtung (5,7), die zwischen Schalldämpfungskörper (3) und Anschlussrohr (13,15) anordenbar ist und aus einem elastischen Material besteht, **dadurch gekennzeichnet, dass** eine Innenwandung des Schalldämpfungskörpers (3) oder eines Distanzstückes im Bereich mindestens eines der beiden Enden des Schalldämpfungskörpers Ausnehmungen (23,25) aufweist, in die jeweils ein Entkopplungselement (5,7) einbringbar ist, und dass das Entkopplungselement (5,7) einen im Wesentlichen U-förmigen Querschnitt aufweist, wobei die beiden Schenkel längs zum Schalldämpfungskörper (3) verlaufen.

2. Klimaanlage nach Anspruch 1, **dadurch gekennzeichnet, dass** die Entkopplungsvorrichtung (5,7) aus einem kautschukhaltigen Material, insbesondere Gummi, besteht.

3. Klimaanlage nach einem der vorhergehenden Ansprüche, **dadurch gekennzeichnet, dass** an beiden Öffnungen (9,11) des Schalldämpfungskörpers (3) ein Anschlussrohr (13,15) einbringbar ist.

4. Klimaanlage nach einem der vorhergehenden Ansprüche, **dadurch gekennzeichnet, dass** die Entkopplungsvorrichtung (5,7) für jede Öffnung des Schalldämpfungskörpers (3) ein Entkopplungselement (5,7) aufweist.

5. Klimaanlage nach einem der vorhergehenden Ansprüche, **dadurch gekennzeichnet, dass** zumindest ein Anschlussrohr (13,15) im Endbereich eine Vertiefung (19,21) aufweist, die derart ausgebildet ist, dass ein Entkopplungselement (5,7) einbringbar ist.

6. Klimaanlage nach einem der vorhergehenden Ansprüche, **dadurch gekennzeichnet, dass** das Entkopplungselement (5,7) profiliert ausgebildet ist.

7. Klimaanlage nach einem der vorhergehenden Ansprüche, **gekennzeichnet durch** ein Distanzstück (27), das zwischen Entkopplungselement (5,7) und Schalldämpfungskörper (3) angeordnet ist.

## Claims

1. Air conditioning system, especially a vehicle air conditioning system with a sound damping device with a sound damping device body (3) which has at least two openings (9, 11), overflowable by a liquid or gaseous medium and at least one of its openings (9) at which a connecting pipe (13) can be fitted, and with an uncoupling device (5, 7) which can be arranged between the sound damping device body (3) and the connecting pipe (13, 15) and is made of a flexible material, **characterised in that** an inner wall of the sound damping device body (3) or of a spacer block in the area of at least one of the two ends of the sound damping device body has recesses (23, 25) into each of which an uncoupling element (5, 7) can be fitted, and that the cross-section of the uncoupling element (5, 7) is essentially U-shaped, so that the two arms extend along the sound damping device body (3).

2. Air conditioning system according to claim 1, **characterised in that** the uncoupling device (5, 7) consists of a material containing caoutchouc, especially rubber.

3. Air conditioning system according to one of the preceding claims, **characterised in that** a connecting pipe (13, 15) can be fitted at both openings (9, 11) of the sound damping device body (3).

4. Air conditioning system according to one of the preceding claims, **characterised in that** the uncoupling device (5, 7) has an uncoupling element (5, 7) for each opening of the sound damping device body (3).

5. Air conditioning system according to one of the preceding claims, **characterised in that** at least one connecting pipe (13, 15) has a depression (19, 21) in the end area, which is formed to accommodate an uncoupling element (5, 7).

6. Air conditioning system according to one of the preceding claims, **characterised in that** the uncoupling element (5, 7) is profiled.

7. Air conditioning system according to one of the preceding claims, **characterised in that** a distance piece (27) is arranged between the uncoupling element (5, 7) and the sound damping device body (3).

## Revendications

1. Installation de climatisation, en particulier une installation de climatisation pour véhicule, comprenant un dispositif d'amortissement du son comportant un corps d'amortissement du son (3) présentant au moins deux ouvertures (9, 11), qui peut être traversé par un fluide liquide ou gazeux et dont au moins une ouverture (9) permet l'adaptation d'un tuyau de raccord (13) ; et un dispositif de découplage (5, 7) qui peut être mis en place entre le corps d'amortissement du son (3) et le tuyau de raccord (13, 15) et qui se compose d'un matériau élastique, **caractérisée en ce qu'**une paroi intérieure du corps d'amortissement du son (3) ou d'une pièce intercalaire comporte dans la zone d'au moins une des deux extrémités du corps d'amortissement du son, des évidements (23, 25), dans chacun desquels peut être inséré un élément de découplage (5, 7), et **en ce que** ledit élément de découplage (5,7) présente une section transversale ayant pour l'essentiel la forme d'un U, les deux bras étant orientés longitudinalement par rapport au corps d'amortissement du son (3).

2. Installation de climatisation selon la revendication 1, **caractérisée en ce que** le dispositif de découplage (5, 7) se compose d'un matériau contenant du caoutchouc, en particulier une gomme.

3. Installation de climatisation selon l'une quelconque des revendications précédentes, **caractérisée en ce qu'**au niveau des deux ouvertures (9, 11) du corps d'amortissement du son (3), un tuyau de raccord (13, 15) peut être inséré.

4. Installation de climatisation selon l'une quelconque des revendications précédentes, **caractérisée en ce que** le dispositif de découplage (5, 7) présente un élément de découplage (5, 7) pour chaque ouverture du corps d'amortissement du son (3).

5. Installation de climatisation selon l'une quelconque des revendications précédentes, **caractérisée en ce qu'**au moins un tuyau de raccord (13, 15) présente, dans la zone de son extrémité, un renfoncement (19, 21) conçu de manière qu'un élément de découplage (5, 7) peut être inséré.

6. Installation de climatisation selon l'une quelconque des revendications précédentes, **caractérisée en ce que** l'élément de découplage (5, 7) est conçu de manière profilée.

7. Installation de climatisation selon l'une quelconque des revendications précédentes, **caractérisée par** une pièce intercalaire (27) qui est disposée entre l'élément de découplage (5, 7) et le corps d'amortissement du son (3).
